Europäisches Patentamt

European Patent Office

Office européen des brevets

(11) Veröffentlichungsnummer: **0 300 154 B1**

(19)

# (12) EUROPÄISCHE PATENTSCHRIFT

(45) Veröffentlichungstag der Patentschrift: **17.06.92**

(21) Anmeldenummer: **88107571.7**

(22) Anmeldetag: **11.05.88**

(51) Int. Cl.⁵: **B01D 25/12**, G21C 19/30

(54) **Einspannvorrichtung für Filterelemente aus Edelstahlfaserpaketen- bzw. matten.**

(30) Priorität: **18.07.87 DE 3723888**

(43) Veröffentlichungstag der Anmeldung:
**25.01.89 Patentblatt 89/04**

(45) Bekanntmachung des Hinweises auf die
Patenterteilung:
**17.06.92 Patentblatt 92/25**

(84) Benannte Vertragsstaaten:
**BE FR GB IT NL SE**

(56) Entgegenhaltungen:
EP-A- 0 184 219    DE-A- 1 536 909
DE-A- 2 112 891    DE-A- 2 517 479
FR-A- 1 304 232    FR-A- 1 432 680
FR-A- 1 440 025

(73) Patentinhaber: **KERNFORSCHUNGSZENTRUM KARLSRUHE GMBH**
**Weberstrasse 5 Postfach 3640**
**W-7500 Karlsruhe 1(DE)**

(72) Erfinder: **Dillmann, Hans-Georg**
**Luisenstrasse 63**
**W-7514 Eggenstein-Leopoldshafen(DE)**
Erfinder: **Pasler, Horst**
**Zur Insel Rott 2-3**
**W-7515 Hochstetten(DE)**
Erfinder: **Martinsteg, Hans**
**Erftweg 4a**
**W-5106 Roetgen(DE)**

## Beschreibung

Die vorliegende Erfindung betrifft eine Einsprannvorrichtung fur Filterelemente aus Edelstahlfaserpaketen- bzw. matten, insbesondere als temperaturfeste Filterstufen in Kanälen von Druckabbausystemen der Sicherheitsbehälter kerntechnischer Anlagen gemäß den weiteren Merkmalen im Oberbegriff des Patentanspruches 1.

Bei den genannten Kanälen der Druckabbausysteme sind u.a. Tropfenabscheider und weitere Filterstufen vorgesehen, die hohen Temperaturen widerstehen können, einen hohen Abscheidegrad besitzen, einfach aufgebaut sind und die Drücken widerstehen können. Zu diesem Zweck werden Edelstahlfaserpakete in Form von ein- oder mehreren hintereinandergeschalteten Edelstahlfasermatten verwendet. Wichtig ist bei der Verwendung solcher Edelstahlfasermatten, das Problem der Einspannung von ihren Rändern her.

Als der nächstliegende Stand der Technik wird die nachveröffentlichte (20.04.88) EP-A-0 263 993 angesehen (Priorität: 17.10.86 DE 3 635 342, Anmeldetag: 16.09.87).

Aufgabe der vorliegenden Erfindung ist es nun eine solche Einspannung anzugeben, bei welcher auch entlang der Fasern parallel zur Richtung des Faserpaketes auftretende Leckagen nicht an die Außenseite des Kanales gelangen können.

Zur Lösung dieser Aufgabe schlägt nun die vorliegende Erfindung die Merkmale vor, die im Kennzeichen des Patentanspruches 1 von a) bis d) aufgeführt sind. Weitere, vorteilhafte Ausgestaltungen der Erfindung bezügl. der Lösung der Aufgabe sind den Merkmalen der Unteransprüche zu entnehmen.

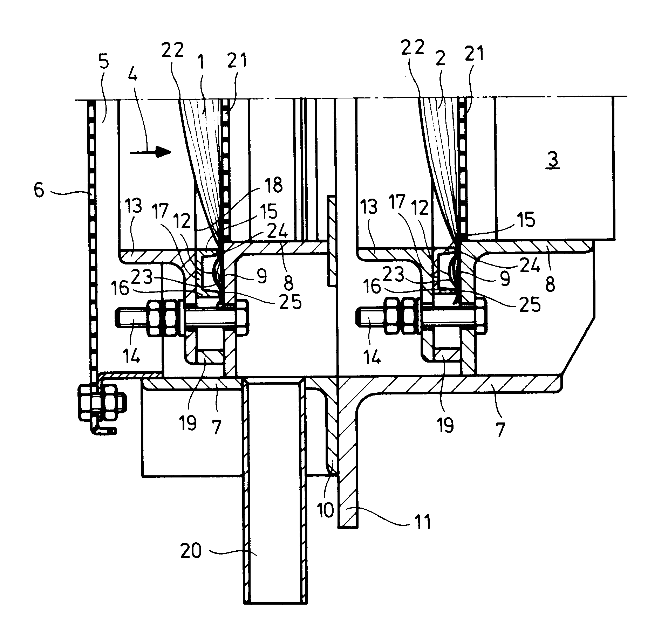

Einzelheiten der vorliegenden Erfindung werden im folgenden und anhand der Figur näher erläutert:
Die Figur zeigt die Einspannvorrichtung in doppelter Ausführung am Beispiel der Einspannung zweier Metallfaserpakete 1 und 2 bzw. von zwei Abscheidestufen am Eingang eines Druckentlastungskanales 3 des nicht dargestellten Sicherheitsbehälters einer kerntechnischen Anlage.

Der Druckentlastungskanal 3 wird in Richtung 4 durch die Eintrittsöffnung 5 angeströmt, welche durch ein Lochblech 6 abgedeckt ist. Auf die Wandung 7 des Kanales 3 ist an der Innenseite ein umlaufender Winkelrahmen 8 als zur Kanalwandung senkrechter Bund aufgeschweißt, dessen eine Seite 9 der Strömungsrichtung 4 zugewendet ist und als Anlagefläche für die Metallfaserpakete 1 und 2 dient. Bei der in der Figur dargestellten Ausführungsform sind zwei hintereinandergeschaltete Metallfaserpakete dargestellt, deren Einspannungen jeweils identisch sind. Die entsprechenden Bauelemente 8, 9, 12, 13, 15, 16, 17 und 14 sind demnach doppelt vorhanden. Wichtig ist bei der bzw. den Einspannungen nun, daß sie völlig innerhalb der Kanalwandung 7 gelegen sind und dabei nach außen dicht bleiben. Die Kanalflansche 10 und 11, mittels welcher Kanalteilstücke zusammengesetzt werden, sind völlig getrennt bzw. unabhängig von der Einspannungsstelle der Ränder 12 der Metallfaserpakete 1 und 2. Diese Einspannung erfolgt nun auf spezielle Weise:
An der Rückseite 9, an welcher druckseitig die Ränder 12 der Faserpakete 1 und 2 anliegen, drückt auf diese ein beweglicher umlaufender Spannrahmen 13, der mittels Schrauben 14 gegen die Rückseite 9 gespannt werden kann. Die eigentliche Dichtstelle bzw. Dichtkante ist dabei doppelt 24, 25 ausgeführt und wird durch die beiden Schenkel 15 und 16 eines weiteren Rahmens 17 aus U-Profil gebildet, der mit seiner Rückseite auf die in Strömungsrichtung 4 weisende Fläche 18 des Spannrahmens 13 geschweißt ist. Damit drücken bei Verspannung mittels der Schrauben 14 die beiden Schenkel 15 und 16 die Ränder 12 der Pakete 1 und 2 gegen die Rückseite 9 des Winkelrahmens 8. Damit sind die Pakete 1 und 2 im Kanal 3 abgedichtet eingespannt, wobei eine evtl. Undichtigkeit der Einspannung entlang der Fasern parallel zu den Faserpaketen durch die Dichtkanten-bzw. stellen 24 und 25 an den Schenkeln 15 und 16 ohne Bedeutung bleibt, da eine evtl. Leckage immer innerhalb des Kanales 3 bleibt. Fur eine parallele Anpressung der Schenkel 15 und 16 sorgt ein Anschlagbund 19, der den Spannrahmen 13 auf der den U-Rahmen 17 - bezogen auf die Schrauben 14 - gegenüberliegenden Seite angeschweißt ist und etwa dieselbe Länge wie die Schwenkel 15 und 16 aufweist. Er liegt damit auch gegen die Fläche 9 an, wodurch eine einwandfreie Verspannung bewirkt wird.

Zwischen den beiden Faserpaketen ist ein Ableitungsstutzen 20 durch die Wandung 7 geführt, mittles welchem zwischen den beiden Faserpaketen evtl. abgeschiedene Flussigkeit nach unten abgeführt werden kann.

In Strömungsrichtung 4 gesehen - hinter den Faserpaketen 1 und 2 sind in den Rahmen 8 zum Stützen derselben Lochbleche 21 etwa bündig mit der Rückseite 9 eingeschweißt. Auf der Rückseite der Pakete - also der Strömungsrichtung 4 zugewendet - werden die Faserpakete 1 und 2 durch Gitter 22 aus Edelstahl gehalten bzw. geschützt, welche der Oberflächenkontur der Pakete 1 und 2 folgen und deren Ränder 23 mit in die Einspannung zwischen den Schenkeln 15 und 16 eingeklemmt sind.

Es ist auch möglich, die Anströmrichtung 4 umzukehren, wodurch die Faserpakete 1, 2 über die Lochbleche 21 angeströmt werden.

**Bezugszeichenliste:**

1 Metallfaserpaket erste Stufe
2 Metallfaserpaket zweite Stufe
3 Druckentlastungskanal
4 Anströmrichtung
5 Eintrittsöffnung
6 Lochblech
7 Wandung
8 Winkelrahmen
9 Außenseite
10 Kanalflansch
11 Kanalflansch
12 Ränder
13 Spannrahmen
14 Schrauben
15 Schenkel
16 Schenkel
17 Rahmen
18 Fläche
19 Anschlagbund
20 Ableitstutzen
21 Lochbleche
22 Gitter
23 Ränder
24 Dichtkante
25 Dichtkante

**Patentansprüche**

1. Einspannvorrichtung für Filterelemente aus Edelstahlfaserpaketen- bzw. matten, insbesondere als temperaturfeste Filterstufen in Kanälen von Druckabbausystemen der Sicherheitsbehälter kerntechnischer Anlagen, wobei die Spannvorrichtung aus Spannelementen besteht, zwischen denen die Ränder der Edelstahlfaserpakete bzw. des Paketes eingeklemmt sind, mit den folgenden Merkmalen:

a) An die Innenseite der Kanalwandung (7) ist ein nach innen ragender, umlaufender und bezüglich der Kanalwandung senkrechter Bund (8, 9) angebracht, dessen einer evtl. Druckaufgabe zugewendete Seite (9) als Anlagefläche für das oder die Edelstahlfaserpakete (1, 2) dient,

b) gegen die Anlagefläche (9) ist vor dem Edelstahlfaserpaket (1, 2) ein umlaufender und gegen sie beweglicher Spannrahmen (13) geschraubt,

c) auf den beweglichen Spannrahmen (13) ist an seiner, dem Edelstahlfaserpaket (1, 2) zugewendeten Seite ein umlaufender Rahmen (17) aus U-Profil aufgeschweißt, dessen Schenkel (15, 16) in die Ränder (12) des Faserpaketes (1,2) eingedrückt sind, die Pressung erzeugen und die Dichtkanten (24, 25) bilden,

d) die außerhalb der Dichtkanten (24, 25) - von der Kanalmitte aus gesehen - gelegenen Ränderteile des Faserpaketes (1, 2), liegen innerhalb der Kanalwandung (7) bzw. innerhalb des Dichtungsbereiches der Flansche (10, 11) durch welche Teilstücke des Kanales (7) zusammengefügt sind.

2. Vorrichtung nach Anspruch 1, gekennzeichnet durch die weiteren Merkmale :

e) Die Edelstahlfaserpakete (1, 2) liegen mit ihrer der Strömungsrichtung (4) abgewendeten Seite flach jeweils an einem Lochblech an, welches in den Rahmen (8) etwa bündig mit der Rahmenseite (9) eingeschweißt ist,

f) auf der der Strömungsrichtung (4) zugewendeten Seite des Faserpaketes (1, 2) ist seine gewölbte Oberfläche durch ein Edelstahlgewebe bzw. Gitter (22) geschützt, welches der Kontur der des Faserpaketes (1, 2) folgt und mit unter die Schenkel (15, 16) eingespannt ist.

3. Vorrichtung nach Anspruch 1 oder Anspruch 2, dadurch gekennzeichnet, daß die gewölbte Seite der Metallfaserpakete (1, 2) die Anströmseite und die flache Seite derselben die Abströmseite oder umgekehrt ist.

**Claims**

1. Clamping device for clamping in position filter elements formed from stainless steel fibre bundles or mats, more especially serving as temperature-resistant filter stages in conduits of pressure reducing systems for the safety containers of nuclear installations, the clamping device comprising clamping elements, between which are clamped the edges of the stainless steel fibre bundles, or respectively of the bundle, said clamping device having the following features:

a) an inwardly protruding, circumferential collar (8, 9), which extends at right angles to the conduit wall, is mounted on the inner surface of the conduit wall (7), one side (9) of said collar facing the direction of possible pressure delivery and serving as the abutment face for the stainless steel fibre bundle or bundles (1, 2),

b) a circumferential clamping frame (13), which is displaceable towards the abutment face (9), is screwed against the latter in front of the stainless steel fibre bundle (1, 2),

c) a circumferential frame (17), formed from a U-shaped profile, is welded onto the displaceable clamping frame (13) at its end facing the stainless steel fibre bundle (1, 2), the arms (15, 16) of said frame being pressed into the edges (12) of the fibre bundle (1, 2), said arms producing the compressive force and forming the sealing edges (24, 25),

d) the edge portions of the fibre bundle (1, 2), which are situated externally of the sealing edges (24, 25) - when viewed from the conduit centre - lie internally of the conduit wall (7), or respectively internally of the sealing region of the flanges (10, 11), by means of which flanges parts of the conduit (7) are joined together.

2. Device according to claim 1, characterised by the additional features:

e) the stainless steel fibre bundles (1, 2) each lie with their side remote from the flow direction (4) flat on a respective perforate plate, which is welded into the frame (8) so as to be substantially flush with the frame end (9),

f) on the side of the fibre bundle (1,2) facing the flow direction (4), its curved surface is protected by a stainless steel netting or lattice (22), which follows the configuration of that of the fibre bundle (1, 2) and is clamped therewith beneath the arms (15, 16).

3. Device according to claim 1 or claim 2, characterised in that the curved side of the metal fibre bundles (1, 2) is the inflow end, and the flat side thereof is the outflow end, or vice versa.

**Revendications**

1. Dispositif de fixation d'éléments de filtre en nappes ou paquets de fibres d'acier inoxydable, notamment en tant qu'étages de filtration résistants à la température dans des canaux de systèmes de détente de pression de cuves de sécurité d'unités nucléaires, le dispositif de fixation comprend des éléments de fixation entre lesquels sont pincés les bords des paquets de fibres d'acier inoxydable, avec les caractéristiques suivantes :

a) sur la face interne de la paroi de canal (7) se trouve un collet (8, 9) périphérique pénétrant à l'intérieur et perpendiculaire de préférence à la paroi du canal, dont une face 9 tournée vers la source de pression éventuelle sert de face d'appui pour le ou les paquets de fibres (1, 2) en acier inoxydable,

b) contre la face d'appui (9) on visse en avant du paquet de fibres en acier inoxydables (1, 2) un cadre de fixation (13) périphérique et mobile par rapport à lui,

c) sur le cadre de fixation (13) mobile, à sa face tournée vers le paquet de fibres en acier inoxydable (1, 2) est soudé un cadre (17) périphérique profilé en U dont les pattes (15, 16) sont fixées sous pression dans les bords (12) du paquet de fibre (1, 2), elles produisent la pression et forment les bords d'étanchéité (24, 25),

d) les pièces de bords des paquets de fibres (1, 2) placés en dehors des bords d'étanchéité (24, 25) - vues du centre du canal - sont à l'intérieur du canal (7) ou à l'intérieur du domaine d'étanchéité des brides (10, 11), grâce auxquelles on assemble les pièces du canal (7).

2. Dispositif selon la revendication 1, caractérisé par les autres caractéristiques :

e) les paquets de fibres en acier inoxydable (1, 2) reposent à plat par leur face opposée au sens d'écoulement (4) sur une tôle perforée qui est soudée dans le cadre (8) en contact avec la face du cadre (9),

f) sur la face du paquet de fibre tournée dans le sens d'écoulement (4) sa surface bombée est protégée par un tissu d'acier inoxydable ou une grille (22) qui suit le contour du paquet de fibre (1, 2) et qui est fixée par les pattes (15, 16) en passant dessous.

3. Dispositif selon la revendication 1 ou la revendication 2, caractérisé en ce que la face bombée du paquet de fibres métalliques (1, 2) est la face balayée la première et sa face plane est la face d'écoulement, ou inversement.